# EUROPEAN PATENT APPLICATION

(11) **EP 2 600 300 A1**
(43) Date of publication of application: **05.06.2013**
(21) Application number: 12195349.1
(22) Date of filing: 03.12.2012
(51) Int. Cl.: G06Q 30/02

(54) **Context-based ratings and recommendations for media**

(30) Priority: 02.12.2011 US 201113309859; 03.03.2012 US 201213411859
(71) Applicant: Microsoft Corporation, Redmond, WA 98052 (US)
(72) Inventor: Aghajanyan, Suren, Redmond, WA 98052 (US); Osborne, Craig A., Redmond, WA 98052 (US)
(74) Representative: Fischer, Michael

(57) **Abstract**

This document describes techniques and apparatuses enabling contextbased ratings and recommendations for media. The techniques and apparatuses can build and continually improve the predictive accuracy of a user's reaction history based on a context in which the user's reactions to media are sensed. Further, the techniques and apparatuses may take into account a current context of a user when a request for a rating or recommendation is made. Based on the user's reaction history and the user's current context, the techniques and apparatuses may provide accurate ratings and recommendations.

## Description

### RELATED APPLICATION

This application is a continuation-in-part of and claims priority under 35 U.S.C. §120 to U.S. Patent Application Serial No. 13/309,859, filed on December 2, 2011 and titled "User Interface Presenting a Media Reaction," the disclosure of which is incorporated by reference in its entirety herein.

### BACKGROUND

Currently, if a user is interested in finding a movie or some other media to enjoy, he or she may research online and newspaper reviews, ask friends, and consult personalized ratings services. Each of these approaches, however, has limitations.

Researching online and newspaper reviews, such as published critical reviews or a source that averages online ratings from critics or typical consumers, can be time consuming or fail to help the user find out if he or she would like the program. They may fail to help the user because the user may not have similar tastes or have a same frame of mind as those of the movie critic or typical consumer.

Asking friends about what they like may take a long while, be unhelpful due to some friends liking media that the user will not like, or be inaccurate due to friends forgetting what they watched or their impressions of what they watched.

Consulting personalized rating systems can be inaccurate or insufficient. These rating systems often do not accurately predict what a user will like, even when based on the user's ratings of previously watched media programs, as these rating systems often are based on simplistic reviews by the user.

### SUMMARY

This document describes techniques and apparatuses enabling context-based ratings and recommendations for media. The techniques and apparatuses can build and continually improve the predictive accuracy of a user's reaction history based on contexts of the user's reactions to media. Further, the techniques and apparatuses may take into account a user's current context when a request for a rating or recommendation is received. Based on the user's reaction history and the user's current context, the techniques and apparatuses may provide accurate ratings and recommendations.

This summary is provided to introduce simplified concepts enabling context-based ratings and recommendations for media, which is further described below in the Detailed Description. This summary is not intended to identify essential features of the claimed subject matter, nor is it intended for use in determining the scope of the claimed subject matter.

### BRIEF DESCRIPTION OF THE DRAWINGS

Embodiments of techniques and apparatuses enabling context-based ratings and recommendations for media are described with reference to the following drawings. The same numbers are used throughout the drawings to reference like features and components:
Fig. 1 illustrates an example environment in which techniques enabling context-based ratings and recommendations for media can be implemented.
Fig. 2 is an illustration of an example computing device that is local to the audience of Fig. 1.
Fig. 3 is an illustration of an example remote computing device that is remote to the audience of Fig. 1.
Fig. 4 illustrates example methods for determining media reactions based on passive sensor data.
Fig. 5 illustrates a time-based graph of media reactions, the media reactions being interest levels for one user and for forty time periods during presentation of a media program.
Fig. 6 illustrates example methods for presenting a media reaction to a media program.
Fig. 7 illustrates a tablet computer of Fig. 2 with a graphical user interface presenting time-based graphs and ratings for three users for a media program.
Fig. 8 illustrates example methods for presenting a media reaction to a media program.
Fig. 9 illustrates example methods enabling determination of a recommended media program based on a current context of a user and the user's reaction history.
Fig. 10 illustrates example methods for building a reaction history based in part on other user's reactions.
Fig. 11 illustrates example methods for altering a reaction history and determining recommended programs based on time and non-time contexts.
Fig. 12 illustrates an example device in which techniques enabling context-based ratings and recommendations for media, as well as other techniques, can be implemented.

### DETAILED DESCRIPTION

### Overview

This document describes techniques and apparatuses enabling context-based ratings and recommendations for media. These techniques can build a reaction history for a user that reflects the user's reactions during media and the user's context during those reactions. Based on this reaction history and a current context of the user, the techniques may then provide ratings and recommendations for media.

Consider, for example, two scenarios in which the techniques provide different movie recommendations based on a same user but different user contexts in which the user requests the recommendation. Assume in the first case that the user, named *Joe,* requests a movie recommendation at 8pm on Thursday, March 14^{th} from his home in Seattle, Washington, and with his wife *Susan* in the room during the request. Assume also that the techniques determine that in Seattle it has been gray and raining for the last three days and that *Joe* typically works from 8am to 6pm Monday through Friday. Thus, the techniques base the movie recommendation on *Joe* likely being tired from his work week and not being able to stay up too late due to needing to work the next day (Friday), the lack of sunshine over the last few days, and differences in *Joe's* preferences based on *Joe's* wife also likely watching the movie with him.

The techniques, in addition to these current contexts, also base the movie recommendation on *Joe's* reaction history, which is also at least partly based on *Joe's* prior reactions and contexts in which those reactions were recorded. With the current context and reaction history, assume that the techniques highly recommend a comedy entitled *Sunshine Cleaners.* This movie has women in a leading role, which *Joe's* reaction history indicates he enjoys when his wife is present, is set in a sunny locale, which is preferred due to the lack of sunshine in Seattle, is not too long, which takes into account that *Joe* may be tired and also cannot likely stay up too late, and is a comedy, which is likely to be enjoyed even when *Joe* is somewhat tired from work.

In the second scenario, assume that *Joe* requests a movie recommendation at 4pm on Sunday, March 17^{th} from his home in Seattle, Washington, and with his daughter *Olivia* in the room during the request. Assume also that the techniques determine that in Seattle it has been a mix of sunshine and clouds over the last couple days and again that *Joe* typically works from 8am to 6pm Monday through Friday. Thus, the techniques base the movie recommendation on *Joe* likely not being tired from his work week, the weather being fairly good, and differences in *Joe's* preferences based on *Joe's* daughter also likely watching the movie with him.

The techniques, again based on current contexts and *Joe's* reaction history, highly recommends a children's movie entitled *Little House on the Prairie.* This movie is not one that *Joe's* history indicates he would enjoy watching alone or with his wife but that he has enjoyed similar programs when his daughter watches with him. The movie also has a young woman in a leading role, which *Joe's* reaction history indicates he enjoys when his daughter is present, is a drama, which *Joe* enjoys when he is not tired (determined based on the distance from *Joe's* work week and the time of day), and is rated "G", which is based on his daughter's age of seven years.

Note that these recommendations are very different based on the user's current context. Other examples may also be considered, such as an adventure movie if *Joe* is watching the movie alone, a hunting show if *Joe* is watching with his hunting buddy right before hunting season, or a favorite Christmas movie if *Joe* requests a recommendation with lots of family present and on December 23^{rd}.

These are but a few examples of how techniques and/or apparatuses enabling context-based ratings and recommendations for media can be performed. Techniques and/or apparatuses are referred to herein separately or in conjunction as the "techniques" as permitted by the context. This document now turns to an example environment in which the techniques can be embodied and then various example methods that can, but are not required to, work in conjunction with the techniques. Some of these various methods include methods for sensing reactions to media and presenting reactions to media. After these various example methods, this document turns to example methods for context-based ratings and recommendations for media.

### Example Environment

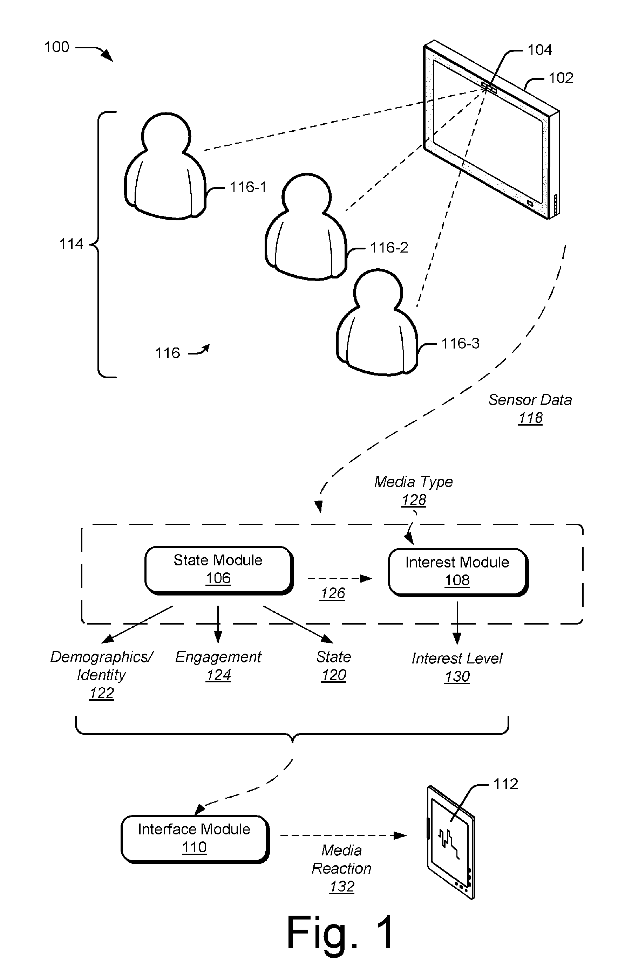

Fig. 1 is an illustration of an example environment 100 for receiving sensor data and determining media reactions based on this sensor data. This environment 100 is but one way in which sensor data may be received and media reactions determined. Various manners of doing so are contemplated herein, some of which may be used to build a user's reaction history based at least in part on contexts in which the user's reactions are sensed or received.

Environment 100 includes a media presentation device 102, an audience-sensing device 104, a state module 106, an interest module 108, an interface module 110, and a user interface 112.

Media presentation device 102 presents a media program to an audience 114 having one or more users 116. A media program can include, alone or in combination, a television show, a movie, a music video, a video clip, an advertisement, a blog, a web page, an e-book, a computer game, a song, a tweet, a photograph, or other audio and/or video media. Audience 114 can include one or more multiple users 116 that are in locations enabling consumption of a media program presented by media presentation device 102 and measurement by audience-sensing device 104, whether separately or within one audience 114. In audience 114 three users are shown: 116-1, 116-2, and 116-3.

Audience-sensing device 104 is capable of passively sensing audience 114 and providing sensor data for audience 114 to state module 106 and/or interest module 108 (sensor data 118 shown provided via an arrow). Here sensor data is passive by not requiring active participation of users in the measurement of those users. Examples of active sensor data include data recorded by users in an audience, such as with hand-written logs, and data sensed from users through biometric sensors worn by users in the audience. Passive sensor data can include data sensed using emitted light or other signals sent by audience-sensing device 104, such as with an infrared sensor bouncing emitted infrared light off of users or the audience space (*e.g*., a couch, walls, etc.) and sensing the light that returns. Examples of passive sensor data and ways in which it is measured are provided in greater detail below.

Audience-sensing device 104 may or may not process sensor data prior to providing it to state module 106 and/or interest module 108. Thus, sensor data may be or include raw data or processed data, such as: RGB (Red, Green, Blue) frames; infrared data frames; depth data; heart rate; respiration rate; a user's head orientation or movement (*e.g*., coordinates in three dimensions, x, y, z, and three angles, pitch, tilt, and yaw); facial (*e.g*., eyes, nose, and mouth) orientation, movement, or occlusion; skeleton's orientation, movement, or occlusion; audio, which may include information indicating orientation sufficient to determine from which user the audio originated or directly indicating which user, or what words were said, if any; thermal readings sufficient to determine or indicating presence and locations of one of users 116; and distance from the audience-sensing device 104 or media presentation device 102. In some cases audience-sensing device 104 includes infrared sensors (webcams, Kinect cameras), stereo microphones or directed audio microphones, and a thermal reader (in addition to infrared sensors), though other sensing apparatuses may also or instead be used.

State module 106 receives sensor data and determines, based on the sensor data, states of users 116 in audience 114 (shown at arrow 120). States include, for example: sad, talking, disgusted, afraid, smiling, scowling, placid, surprised, angry, laughing, screaming, clapping, waving, cheering, looking away, looking toward, leaning away, leaning toward, asleep, or departed, to name just a few.

The talking state can be a general state indicating that a user is talking, though it may also include subcategories based on the content of the speech, such as talking about the media program (related talking) or talking that is unrelated to the media program (unrelated talking). State module 106 can determine which talking category through speech recognition.

State module 106 may also or instead determine, based on sensor data, a number of users, a user's identity and/or demographic data (shown at 122), or engagement (shown at 124) during presentation. Identity indicates a unique identity for one of users 116 in audience 114, such as *Susan Brown.* Demographic data classifies one of users 116, such as *5 feet, 4 inches tall, young child,* and *male* or *female.* Engagement indicates whether a user is likely to be paying attention to the media program, such as based on that user's presence or head orientation. Engagement, in some cases, can be determined by state module 106 with lower-resolution or less-processed sensor data compared to that used to determine states. Even so, engagement can be useful in measuring an audience, whether on its own or to determine a user's interest using interest module 108.

Interest module 108 determines, based on sensor data 118 and/or a user's engagement or state (shown with dashed-line arrow 126) and information about the media program (shown at media type arrow 128), that user's interest level (arrow 130) in the media program. Interest module 108 may determine, for example, that multiple laughing states for a media program intended to be a serious drama indicate a low level of interest and conversely, that for a media program intended to be a comedy, that multiple laughing states indicate a high level of interest.

As illustrated in Fig. 1, state module 106 and/or interest module 108 provide demographics/identity 122 as well as one or more of the following media reactions: engagements, shown at arrow 124, states, shown at arrow 120, or interest levels, shown at arrow 130. Based on one or more of these media reactions, state module 106 and/or interest module 108 may also provide another type of media reaction, that of overall media reactions to a media program, such as a rating (*e.g*., thumbs up or three stars). In some cases, however, media reactions are received and overall media reactions are determined instead by interface module 110.

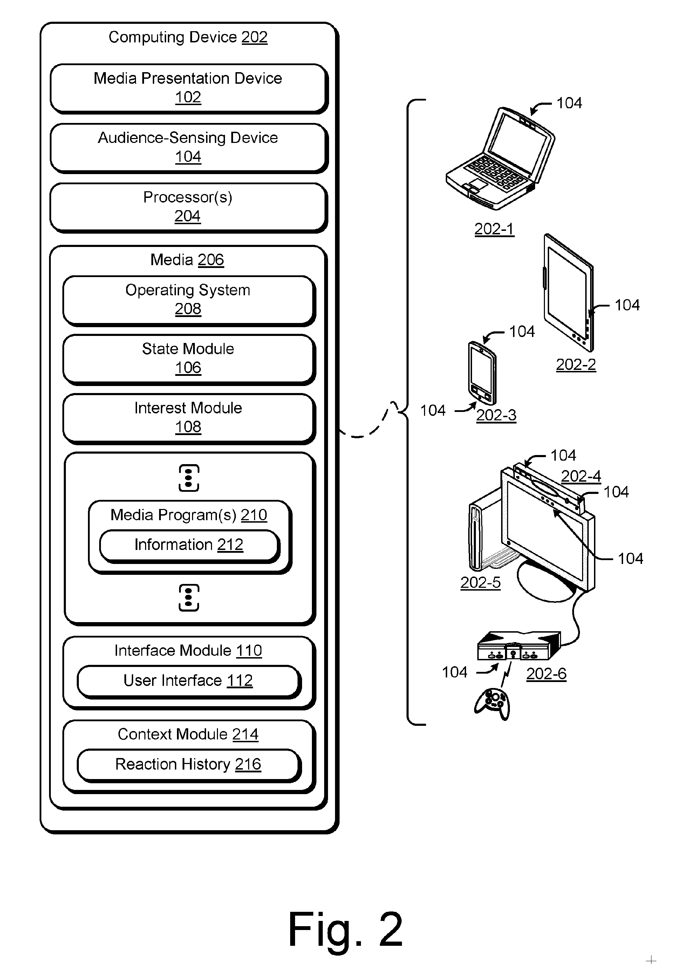

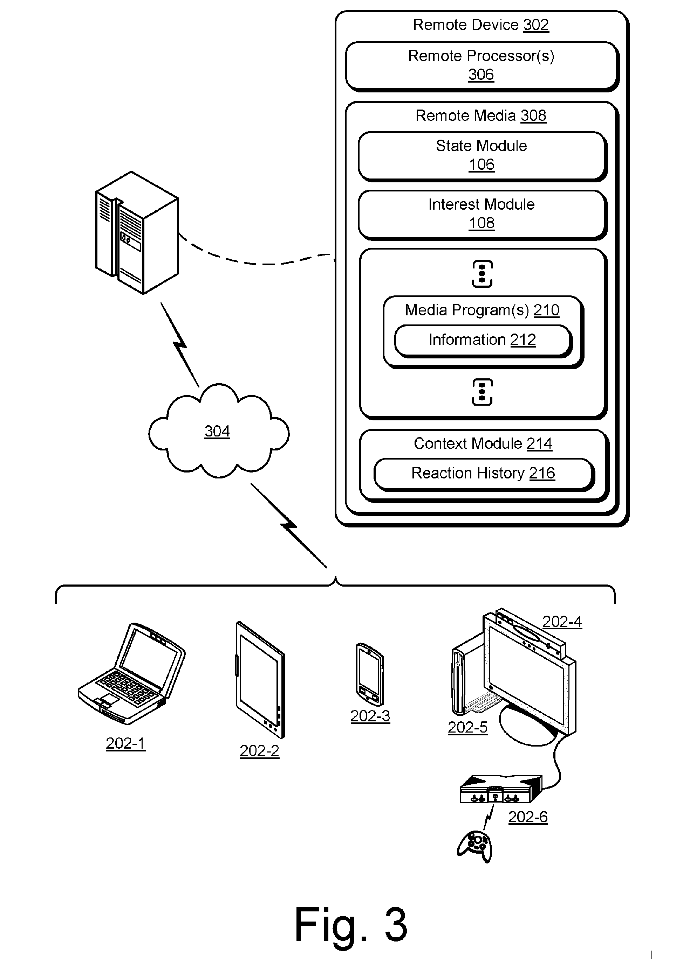

State module 106 and interest module 108 can be local to audience 114, and thus media presentation device 102 and audience-sensing device 104, though this is not required. An example embodiment where state module 106 and interest module 108 are local to audience 114 is shown in Fig. 2. In some cases, however, state module 106 and/or interest module 108 are remote from audience 114, which is illustrated in Fig. 3.

Interface module 110 receives media reactions (overall or otherwise) and demographics/identity information, and determines or receives some indication as to which media program the reactions pertain. Interface module 110 presents, or causes to be presented, a media reaction (shown at arrow 132) to a media program through user interface 112. This media reaction can be any of the above-mentioned reactions, some of which are presented in a time-based graph to show a user's reaction over the course of the associated media program.

Interface module 110 can be local to audience 114, such as in cases where one user is viewing his or her own media reactions or those of a family member. In many cases, however, interface module 110 receives media reactions from a remote source.

Note that sensor data 118 may include a context in which a user is reacting to media or a current context for a user for which ratings or recommendations for media are requested. Thus, audience-sensing device 104 may sense that a second person is in the room, which is context for the first person, and the like. Contexts may also be determined in other manners described in Fig. 2 below.

Fig. 2 is an illustration of an example computing device 202 that is local to audience 114. Computing device 202 includes or has access to media presentation device 102, audience-sensing device 104, one or more processors 204, and computer-readable storage media ("media") 206.

Media 206 includes an operating system 208, state module 106, interest module 108, media program(s) 210, each of which may include or have associated program information 212, interface module 110, user interface 112, context module 214, and reaction history 216.

Context module 214 includes or has access to reaction history 216. Context module 214 may build and update reaction history 216 based on ongoing reactions by the user (or others as noted below) to media programs. In some cases context module 214 determines various contexts for a user, though this may instead be determined and received from other entities. Thus, in some cases context module 214 determines a time, a locale, weather at the locale, and so forth, during the user's reaction to media or request for ratings or recommendations for media.

Further, context module 214 may determine ratings and/or recommendations for media based on a current context for a user and reaction history 216. Ways in which context module 214 may do so are set forth elsewhere herein.

Note that in this illustrated example, media presentation device 102, audience-sensing device 104, state module 106, interest module 108, interface module 110, and context module 214 are included within a single computing device, such as a desktop computer having a display, forward-facing camera, microphones, audio output, and the like. Each of these entities 102, 104, 106, 108, 110, and 212, however, may be separate from or integral with each other in one or multiple computing devices or otherwise. As will be described in part below, media presentation device 102 can be integral with audience-sensing device 104 but be separate from state module 106, interest module 108, interface module 110, or context module 214. Further, each of modules 106, 108, 110, and 212 may operate on separate devices or be combined in one device.

As shown in Fig. 2, computing device(s) 202 can each be one or a combination of various devices, here illustrated with six examples: a laptop computer 202-1, a tablet computer 202-2, a smart phone 202-3, a set-top box 202-4, a desktop 202-5, and a gaming system 202-6, though other computing devices and systems, such as televisions with computing capabilities, netbooks, and cellular phones, may also be used. Note that three of these computing devices 202 include media presentation device 102 and audience-sensing device 104 (laptop computer 202-1, tablet computer 202-2, smart phone 202-3). One device excludes but is in communication with media presentation device 102 and audience-sensing device 104 (desktop 202-5). Two others exclude media presentation device 102 and may or may not include audience-sensing device 104, such as in cases where audience-sensing device 104 is included within media presentation device 102 (set-top box 202-4 and gaming system 202-6).

Fig. 3 is an illustration of an example remote computing device 302 that is remote to audience 114. Fig. 3 also illustrates a communications network 304 through which remote computing device 302 communicates with audience-sensing device 104 (not shown, but embodied within, or in communication with, computing device 202), interface module 110, and/or context module 214 (including or excluding reaction history 216). Communication network 304 may be the Internet, a local-area network, a wide-area network, a wireless network, a USB hub, a computer bus, another mobile communications network, or a combination of these.

Remote computing device 302 includes one or more processors 306 and remote computer-readable storage media ("remote media") 308. Remote media 308 includes state module 106, interest module 108, media program(s) 210, each of which may include or have associated program information 212, context module 214, and reaction history 216. Note that in this illustrated example, media presentation device 102 and audience-sensing device 104 are physically separate from state module 106 and interest module 108, with the first two local to an audience viewing a media program and the second two operating remotely. Thus, as will be described in greater detail below, sensor data is passed from audience-sensing device 104 to one or both of state module 106 or interest module 108, which can be communicated locally (Fig. 2) or remotely (Fig. 3). Further, after determination by state module 106 and/or interest module 108, various media reactions and other information can be communicated to the same or other computing devices 202 for receipt by interface module 110 and/or context module 214. Thus, in some cases a first of computing devices 202 may measure sensor data, communicate that sensor data to remote device 302, after which remote device 302 communicates media reactions to another of computing devices 202, all through network 304.

These and other capabilities, as well as ways in which entities of Figs. 1-3 act and interact, are set forth in greater detail below. These entities may be further divided, combined, and so on. The environment 100 of Fig. 1 and the detailed illustrations of Figs. 2 and 3 illustrate some of many possible environments capable of employing the described techniques.

### Example Methods

### Determining Media Reactions based on Passive Sensor Data

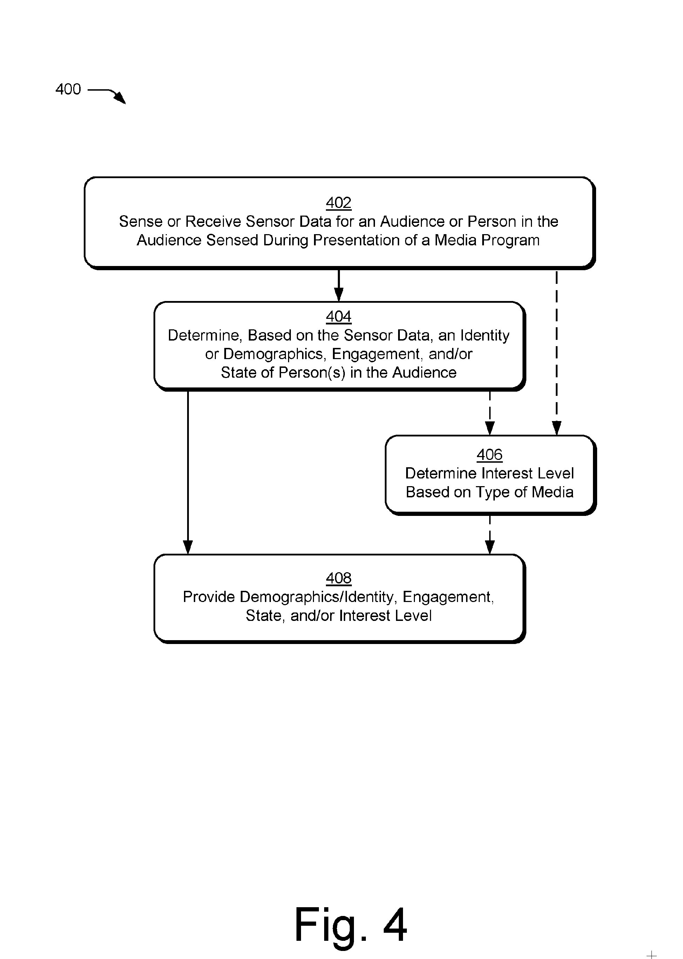

Fig. 4 depicts methods 400 determines media reactions based on passive sensor data. These and other methods described herein are shown as sets of blocks that specify operations performed but are not necessarily limited to the order shown for performing the operations by the respective blocks. In portions of the following discussion reference may be made to environment 100 of Fig. 1 and entities detailed in Figs. 2-3, reference to which is made for example only. The techniques are not limited to performance by one entity or multiple entities operating on one device.

Block 402 senses or receives sensor data for an audience or user, the sensor data passively sensed during presentation of a media program to the audience or user. This sensor data may include a context of the audience or user or a context may be received separately.

Consider, for example, a case where an audience includes three users 116, users 116-1, 116-2, and 116-3 all of Fig. 1. Assume that media presentation device 102 is an LCD display having speakers and through which the media program is rendered and that the display is in communication with set-top box 202-4 of Fig. 2. Here audience-sensing device 104 is a Kinect, forward-facing high-resolution infrared red-green-blue sensor and two microphones capable of sensing sound and location that is integral with set-top box 202-4 or media presentation device 102. Assume also that the media program 210 being presented is a PG-rated animated movie named *Incredible Family,* which is streamed from a remote source and through set-top box 202-4. Set-top box 202-4 presents *Incredible Family* with six advertisements, spaced one at the beginning of the movie, three in a three-ad block, and two in a two-ad block.

Sensor data is received for all three users 116 in audience 114; for this example consider first user 116-1. Assume here that, over the course of *Incredible Family,* that audience-sensing device 104 measures, and then provides at block 402, the following at various times for user 116-1:
Time 1, head orientation 3 degrees, no or low-amplitude audio.
Time 2, head orientation 24 degrees, no audio.
Time 3, skeletal movement (arms), high-amplitude audio.
Time 4, skeletal movement (arms and body), high-amplitude audio.
Time 5, head movement, facial-feature change (20%), moderate-amplitude audio.
Time 6, detailed facial orientation data, no audio.
Time 7, skeletal orientation (missing), no audio.
Time 8, facial orientation, respiration rate.

Block 404 determines, based on the sensor data, a state of the user during the media program. In some cases block 404 determines a probability for the state or multiple probabilities for multiple states, respectively. For example, block 404 may determine a state likely to be correct but with less than full certainty (*e.g*., 120% chance that the user is laughing). Block 404 may also or instead determine that multiple states are possible based on the sensor data, such as a sad or placid state, and probabilities for each (*e.g*., sad state 65%, placid state 35%).

Block 404 may also or instead determine demographics, identity, and/or engagement. Further, methods 400 may skip block 404 and proceed directly to block 406, as described later below.

In the ongoing example, state module 106 receives the above-listed sensor data and determines the following corresponding states for user 116-1:
Time 1: Looking toward.
Time 2: Looking away.
Time 3: Clapping.
Time 4: Cheering.
Time 5: Laughing.
Time 6: Smiling.
Time 7: Departed.
Time 8: Asleep.

At Time 1 state module 106 determines, based on the sensor data indicating a 3-degree deviation of user 116-1's head from looking directly at the LCD display and a rule indicating that the looking toward state applies for deviations of less than 20 degrees (by way of example only), that user 116-1's state is looking toward the media program. Similarly, at Time 2, state module 106 determines user 116-1 to be looking away due to the deviation being greater than 20 degrees.

At Time 3, state module 106 determines, based on sensor data indicating that user 116-1 has skeletal movement in his arms and audio that is high amplitude that user 116-1 is clapping. State module 106 may differentiate between clapping and other states, such as cheering, based on the type of arm movement (not indicated above for brevity). Similarly, at Time 4, state module 106 determines that user 116-1 is cheering due to arm movement and high-amplitude audio attributable to user 116-1.

At Time 5, state module 106 determines, based on sensor data indicating that user 116-1 has head movement, facial-feature changes of 20%, and moderate-amplitude audio, that user 116-1 is laughing. Various sensor data can be used to differentiate different states, such as screaming, based on the audio being moderate-amplitude rather than high-amplitude and the facial-feature changes, such as an opening of the mouth and a rising of both eyebrows.

For Time 6, audience-sensing device 104 processes raw sensor data to provide processed sensor data, and in this case facial recognition processing to provide detailed facial orientation data. In conjunction with no audio, state module 106 determines that the detailed facial orientation data (here upturned lip corners, amount of eyelids covering eyes) that user 116-1 is smiling.

At Time 7, state module 106 determines, based on sensor data indicating that user 116-1 has skeletal movement moving away from the audience-sensing device 104, that user 116-1 is departed. The sensor data may indicate this directly as well, such as in cases where audience-sensing device 104 does not sense user 116-1's presence, either through no skeletal or head readings or a thermal signature no longer being received.

At Time 8, state module 106 determines, based on sensor data indicating that user 116-1's facial orientation has not changed over a certain period (*e.g*., the user's eyes have not blinked) and a steady, slow respiration rate that user 116-1 is asleep.

These eight sensor readings are simplified examples for purpose of explanation. Sensor data may include extensive data as noted elsewhere herein. Further, sensor data may be received measuring an audience every fraction of a second, thereby providing detailed data for tens, hundreds, and thousands of periods during presentation of a media program and from which states or other media reactions may be determined.

Returning to methods 400, block 404 may determine demographics, identity, and engagement in addition to a user's state. State module 106 may determine or receive sensor data from which to determine demographics and identity or receive, from audience-sensing device 104, the demographics or identity. Continuing the ongoing example, the sensor data for user 116-1 may indicate that user 116-1 is *John Brown,* that user 116-2 is *Lydia Brown,* and that user 116-3 is *Susan Brown,* for example. Or sensor data may indicate that user 116-1 is *six feet, four inches* tall and *male* (based on skeletal orientation), for example. The sensor data may be received with or include information indicating portions of the sensor data attributable separately to each user in the audience. In this present example, however, assume that audience-sensing device 104 provides three sets of sensor data, with each set indicating the identity of the user along with the sensor data.

Also at block 404, the techniques may determine an engagement of an audience or user in the audience. As noted, this determination can be less refined than that of states of a user, but nonetheless is useful. Assume for the above example, that sensor data is received for user 116-2 (*Lydia Brown*), and that this sensor data includes only head and skeletal orientation:
Time 1, head orientation 0 degrees, skeletal orientation upper torso forward of lower torso.
Time 2, head orientation 2 degrees, skeletal orientation upper torso forward of lower torso.
Time 3, head orientation 5 degrees, skeletal orientation upper torso approximately even with lower torso.
Time 4, head orientation 2 degrees, skeletal orientation upper torso back from lower torso.
Time 5, head orientation 16 degrees, skeletal orientation upper torso back from lower torso.
Time 6, head orientation 37 degrees, skeletal orientation upper torso back from lower torso.
Time 7, head orientation 5 degrees, skeletal orientation upper torso forward of lower torso.
Time 8, head orientation 1 degree, skeletal orientation upper torso forward of lower torso.

State module 106 receives this sensor data and determines the following corresponding engagement for *Lydia Brown*:
Time 1: Engagement High.
Time 2: Engagement High.
Time 3: Engagement Medium-High.
Time 4: Engagement Medium.
Time 5: Engagement Medium-Low.
Time 6: Engagement Low.
Time 7: Engagement High.
Time 8: Engagement High.

At Times 1, 2, 7, and 8, state module 106 determines, based on the sensor data indicating a 5-degree-or-less deviation of user 116-2's head from looking directly at the LCD display and skeletal orientation of upper torso forward of lower torso (indicating that *Lydia* is leaning forward to the media presentation) that *Lydia* is highly engaged in *Incredible Family* at these times.

At Time 3, state module 106 determines that *Lydia's* engagement level has fallen due to *Lydia* no longer leaning forward. At Time 4, state module 106 determines that *Lydia's* engagement has fallen further to medium based on *Lydia* leaning back, even though she is still looking almost directly at *Incredible Family.*

At Times 5 and 6, state module 106 determines *Lydia* is less engaged, falling to Medium-Low and then Low engagement based on *Lydia* still leaning back and looking slightly away (16 degrees) and then significantly away (37 degrees), respectively. Note that at Time 7 *Lydia* quickly returns to a High engagement, which media creators are likely interested in, as it indicates content found to be exciting or otherwise captivating.

Methods 400 may proceed directly from block 402 to block 406, or from block 404 to block 406 or block 408. If proceeding to block 406 from block 404, the techniques determine an interest level based on the type of media being presented and the user's engagement or state. If proceeding to block 406 from block 402, the techniques determine an interest level based on the type of media being presented and the user's sensor data, without necessarily first or independently determining the user's engagement or state.

Continuing the above examples for users 116-1 and 116-2, assume that block 406 receives states determined by state module 106 at block 404 for user 116-1 (*John Brown*). Based on the states for *John Brown* and information about the media program, interest module 108 determines an interest level, either overall or over time, for *Incredible Family.* Assume here that *Incredible Family* is both an adventure and a comedy program, with portions of the movie marked as having one of these media types. While simplified, assume that Times 1 and 2 are marked as comedy, Times 3 and 4 are marked as adventure, Times 5 and 6 are marked as comedy, and that Times 7 and 8 are marked as adventure. Revisiting the states determined by state module 106, consider the following again:
Time 1: Looking toward.
Time 2: Looking away.
Time 3: Clapping.
Time 4: Cheering.
Time 5: Laughing.
Time 6: Smiling.
Time 7: Departed.
Time 8: Asleep.

Based on these states, state module 106 determines for Time 1 that *John Brown* has a medium-low interest in the content at Time 1 - if this were of an adventure or drama type, state module 106 may determine *John Brown* to instead be highly interested. Here, however, due to the content being comedy and thus intended to elicit laughter or a similar state, interest module 108 determines that *John Brown* has a medium-low interest at Time 1. Similarly, for Time 2, interest module 108 determines that *John Brown* has a low interest at Time 2 because his state is not only not laughing or smiling but is looking away.

At Times 3 and 4, interest module 108 determines, based on the adventure type for these times and states of clapping and cheering, that *John Brown* has a high interest level. At time 6, based on the comedy type and *John Brown* smiling, that he has a medium interest at this time.

At Times 7 and 8, interest module 108 determines that *John Brown* has a very low interest. Here the media type is adventure, though in this case interest module 108 would determine *John Brown's* interest level to be very low for most types of content.

As can be readily seen, advertisers, media providers, and media creators can benefit from knowing a user's interest level. Here assume that the interest level is provided over time for *Incredible Family,* along with demographic information about *John Brown.* With this information from numerous demographically similar users, a media creator may learn that male adults are interested in some of the adventure content but that most of the comedy portions are not interesting, at least for this demographic group.

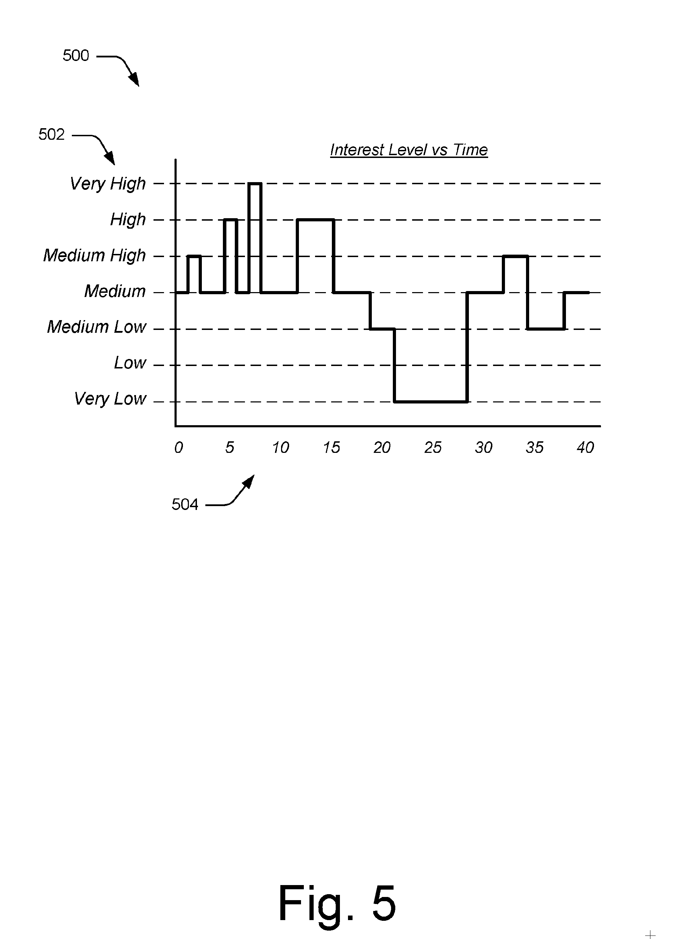

Consider, by way of a more-detailed example, Fig. 5, which illustrates a time-based graph 500 having interest levels 502 for forty time periods 504 over a portion of a media program. Here assume that the media program is a movie that includes other media programs-advertisements-at time periods 18 to 30. Interest module 108 determines, as shown, that the user begins with a medium interest level, and then bounces between medium and medium-high, high, and very high interest levels to time period 18. During the first advertisement, which covers time periods 18-22, interest module 108 determines that the user has a medium low interest level. For time periods 23 to 28, however, interest module 108 determines that the user has a very low interest level (because he is looking away and talking or left the room, for example). For the last advertisement, which covers time period 28 to 32, however, interest module 108 determines that the user has a medium interest level for time periods 29 to 32-most of the advertisement. This can be valuable information-the user stayed for the first advertisement, left for the middle advertisement and the beginning of the last advertisement, and returned, with medium interest, for most of the last advertisement. Contrast this resolution and accuracy of interest with some conventional approaches, which likely would provide no information about how many of the people that watched the movie actually watched the advertisements, which ones, and with what amount of interest. If this example is a common trend with the viewing public, prices for advertisements in the middle of a block would go down, and other advertisement prices would be adjusted as well. Or, advertisers and media providers might learn to play shorter advertisement blocks having only two advertisements, for example. Interest levels 502 also provide valuable information about portions of the movie itself, such as through the very high interest level at time period 7 and the waning interest at time periods 35-38.

Note that, in some cases, engagement levels, while useful, may be less useful or accurate than states and interest levels. For example, state module 106 may determine, for just engagement levels, that a user is not engaged if the user's face is occluded (blocked) and thus not looking at the media program. If the user's face is blocked by that user's hands (skeletal orientation) and audio indicates high-volume audio, state module 106, when determining states, may determine the user to be screaming. A screaming state indicates, in conjunction with the content being horror or suspense, an interest level that is very high. This is but one example of where an interest level can be markedly different from that of an engagement level.

As noted above, methods 400 may proceed directly from block 402 to block 406. In such a case, interest module 108, either alone or in conjunction with state module 106, determines an interest level based on the type of media (including multiple media types for different portions of a media program) and the sensor data. By way of example, interest module 108 may determine that for sensor data for *John Brown* at Time 4, which indicates skeletal movement (arms and body), and high-amplitude audio, and a comedy, athletics, conflict-based talk show, adventure-based video game, tweet, or horror types, that *John Brown* has a high interest level at Time 4. Conversely, interest module 108 may determine that for the same sensor data at Time 4 for a drama, melodrama, or classical music, that *John Brown* has a low interest level at Time 4. This can be performed based on the sensor data without first determining an engagement level or state, though this may also be performed.

Block 408, either after block 404 or 406, provides the demographics, identity, engagement, state, and/or interest level. State module 106 or interest module 108 may provide this information to various entities, such as interface module 110, as well as advertisers, media creators, and media providers. Providing this information to an advertising entity or media provider can be effective to enable the advertising entity to measure a value of their advertisements shown during a media program or the media provider to set advertisement costs. Providing this information to a media creator can be effective to enable the media creator to assess a potential value of a similar media program or portion thereof. For example, a media creator, prior to releasing the media program to the general public, may determine portions of the media program that are not well received, and thus alter the media program to improve it.

Providing this information to a rating entity can be effective to enable the rating entity to automatically rate the media program for the user. Still other entities, such as a media controller, may use the information to improve media control and presentation. A local controller may pause the media program responsive to all of the users in the audience departing the room, for example. Providing media reactions to interest module 110 are addressed in detail in other methods described below.

Further, this information may be provided to other entities as well. Providing this information to a rating entity, for example, can be effective to enable the rating entity to automatically rate the media program for the user (*e.g*., four stars out of five or a "thumbs up"). Providing this information to a media controller, for example, may enable the media controller to improve media control and presentation, such as by pausing the media program responsive to all of the users in the audience departing the room. Providing media reactions to context module 214 can be effective to enable context module 214 to build and update reaction history 216. Context module 214 may build reaction history 216 based on a context or contexts in which each set of media reactions to a media program are received, or the media reactions may, in whole or in part, factor in a context into the media reactions. Thus, a context for a media reaction where the user is watching a television show on a Wednesday night after work may be altered to reflect that the user may be tired from work. Various aspects involving contexts are set forth in more detail below.

As noted herein, the techniques can determine numerous states for a user over the course of most media programs, even for 15-second advertisements or video snippets. In such a case block 404 is repeated, such as at one-second periods.

Furthermore, state module 106 may determine not only multiple states for a user over time, but also various different states at a particular time. A user may be both laughing and looking away, for example, both of which are states that may be determined and provided or used to determine the user's interest level.

Further still, either or both of state module 106 and interest module 108 may determine engagement, states, and/or interest levels based on historical data in addition to sensor data or media type. In one case a user's historical sensor data is used to normalize the user's engagement, states, or interest levels. If, for example, *Susan Brown* is viewing a media program and sensor data for her is received, the techniques may normalize or otherwise learn how best to determine engagement, states, and interest levels for her based on her historical sensor data. If *Susan Brown's* historical sensor data indicates that she is not a particularly expressive or vocal user, the techniques may adjust for this history. Thus, lower-amplitude audio may be sufficient to determine that *Susan Brown* laughed compared to a amplitude of audio used to determine that a typical user laughed.

In another case, historical engagement, states, or interest levels of the user for which sensor data is received are compared with historical engagement, states, or interest levels for other people. Thus, a lower interest level may be determined for *Lydia Brown* based on data indicating that she exhibits a high interest for almost every media program she watches compared to other people's interest levels (either generally or for the same media program). In either of these cases the techniques learn over time, and thereby can normalize engagement, states, and/or interest levels.

### Methods for Presenting Media Reactions

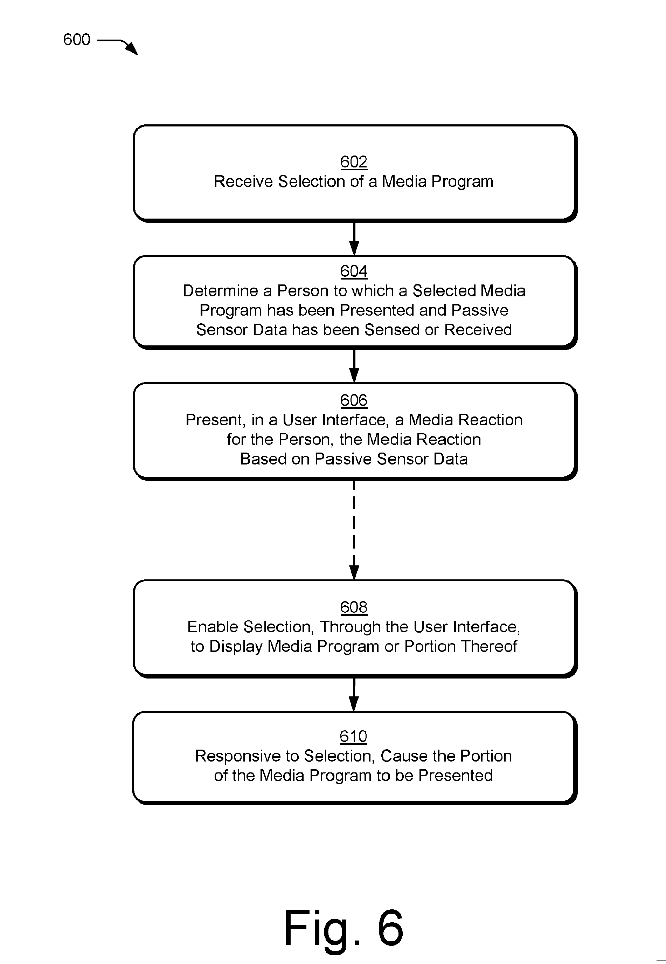

Fig. 6 depicts methods 600 enabling a user interface presenting media reactions. Methods 600 are responsive to determining one or more users to which a selected media program has been presented, though this is not required.

People often want to know how other people reacted to a particular program, such as to compare his or her own reactions to theirs or to decide whether or not to watch the program. By way of example, consider again the above example of *Melody Pond* wishing to determine which of her friends and family watched a particular episode of *The Office* and their reactions to it. Here assume that *Melody* does not yet know which of her friends and family have seen the episode and that she has not yet seen the episode.

Block 602 receives selection of a media program. This can be through selecting an icon, graphic, or label for the media program, or receiving terms for a search inquiry by which to determine the media program, or other manners. Assume here that *Melody* enters, into a data entry field (not shown) of user interface 112, the search terms: "the office". In response, interface module 110 presents likely candidates, such as a movie named "the office" and the last three episodes of the television show *The Office.* In response, *Melody* selects the most-recent episode of the television show, episode 104.

Block 604 determines a user to which a selected media program has been presented and passive sensor data has been sensed during the presentation of the selected media program to the user or for which media reactions have been received. Block 604 may determine users from a group that have indicated a selection to share media reactions with the user of the user interface, such as friends and family. Block 604 may also or instead find other people that the user doesn't know, such as published critics or famous people for which passive sensor data has been recorded. For this example, *Melody's* friends and family are found, namely *Calvin Pond, Lydia Brown,* and *Amelia Pond.*

At some point media reactions for a user are received by interface module 110, whether from a local or remote state module 106 or interest module 108 (e.g., at computing device 202 or remote device 302, respectively).

Block 606 presents, in a user interface, a media reaction for the user, the media reaction determined based on the passive sensor data sensed during the presentation of the selected media program to the user. The media reaction can include any of the reactions noted above, such as an overall rating for the program or a time-based graph showing reactions over the course of the program, to name just two.

A time-based graph shows media reactions for the user over at least some portion of the media program, such as at particular time periods. Interface module 110 may present the media reactions in a lower-resolution format, such as by aggregating or averaging these media reactions. If media reactions are received in one-second time periods, for example, interface module 110 may average these into larger (*e.g*., five-second or ten-second) time periods. By so doing, a user may more-easily consume the information. Interface module 110, however, may also enable the user to select to view the original, higher resolution as well.

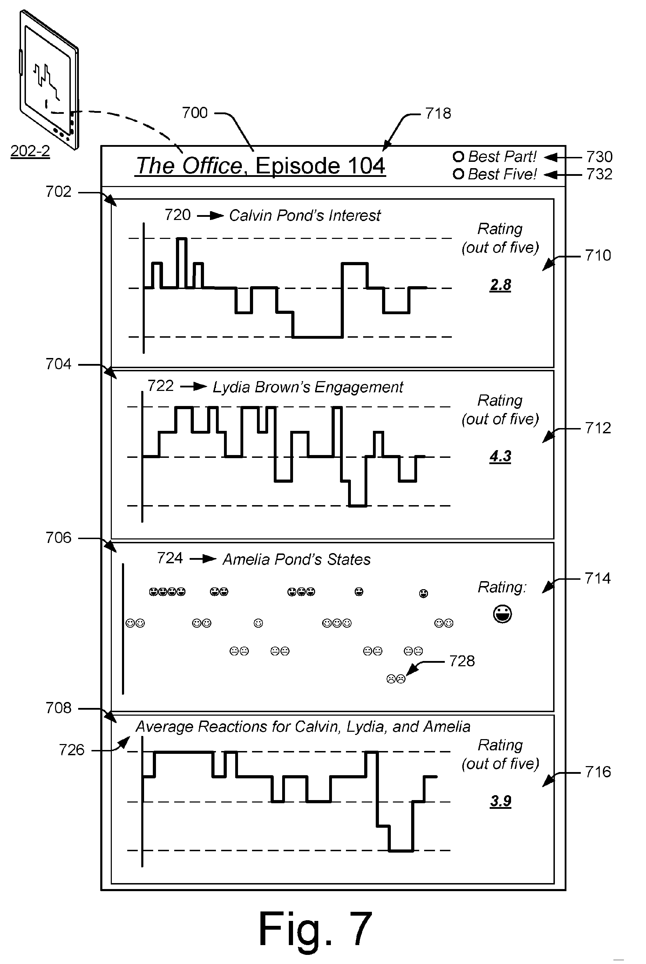

Consider, for example, Fig. 7, which illustrates tablet computer 202-2 with a graphical user interface 700 presenting time-based graphs and ratings for three users for a media program. Continuing the ongoing example, three users are determined: *Amelia Pond, Calvin Pond,* and *Lydia Brown.* For breadth of illustration, each of the time-based graphs show different categories of media reactions, namely engagement, interest level, and state, each of which are described above, as well as an average of these three in one time-based graph. The four graphs each present 44 media reactions (separately or as an average), one for each 30-second time period of 22 total minutes of media content.

Interest level graph 702 shows interest levels over the 44 time periods for *Calvin Pond.* Interest level graph 702 shows that *Calvin* had a medium to very low interest level through much of the program.

Engagement graph 704 shows engagements over the 44 time periods for *Lydia Brown.* Engagement graph 704 shows that *Lydia* was highly engaged for much of the program. Here assume that *Lydia* watched the program through a mobile device having a lower-resolution audience-sensing device (*e.g.,* a camera in smart phone 202-3) and thus engagements for *Lydia* were received.

State graph 706 shows states over the 44 time periods for *Amelia Pond.* State graph 706 shows that *Amelia* was laughing or smiling through most of the program. For visual brevity, state graph 706 shows four states, laughing, smiling, looking-away, and crying.

Average reaction graph 708 shows an average of *Calvin's* interest levels, *Lydia's* engagement, and *Amelia's* states. This can be useful to the user to gauge how his or her friends (in this case *Melody Pond*) liked the media program. An average of reactions can be any mix of reactions or just include states, engagements, or interest levels of multiple people, though this is not required. Here the average includes all three of interest levels, engagements, and states. To produce this average, the techniques may convert any non-numerical reactions, such as *Amelia's* states, to a number for averaging, as well as normalize and/or weight one or more of the reactions.

Graphical user interface 700 also presents four ratings, 710, 712, 714, and 716. These ratings are based on the reactions received or can be received themselves. Thus, these ratings can be determined automatically by state module 106, interest module 108, or interface module 110, or they may be based on a manual selection by the user. The first rating, 710, indicates that *Calvin's* rating is 2.8 out of five, which corresponds to interest level graph 702. The second rating, 712, indicates that *Lydia's* rating is 4.3 out of five, which corresponds to her high engagement throughout the program. The third rating, 714, summarizes *Amelia's* most-common state, that of laughing, and presents a laughing graphic to show this rating. The fourth rating, 716, is an average of the first, second, and third ratings, with the third rating converted into a number (4.5) to produce the fourth rating of 3.9.

Graphical user interface 700 presents an identity of the media program (*The Office,* Episode 104) at 718 and identifiers for individual users at 720, 722, and 724, and a conglomerate of these individual users at 726, which here are the user's names, though icons, avatars, graphics, or other identifiers may be used.

Returning to methods 600, the techniques may optionally enable selection, through the user interface, to display the media program or a portion thereof. This option is shown at block 608. Interface module 110 can enable selection to play all of the media program, for example, through selection of the identifier (here 718 in graphical user interface 700). A portion or portions may also be selected. Consider a case where the media reactions are presented with some correlation or associated with portions of the media program, such as with time periods in the above-described time-based graphs.

In such a case, block 608 enables selection, through the time-based graph of the user interface, to display a portion of the media program corresponding to a media reaction, such as a very high engagement in engagement graph 704 or a crying state in state graph 706. Thus, a user of graphical user interface 700, such as *Melody Pond,* may select a crying icon 728 in state graph 706 to see the portion of *The Office* during which *Amelia* cried. Further, interface module 110 enables users to select to see the media program in conjunction with a representation of a user's media reactions, such as through an animated avatar performing a state (*e.g*., laughing, clapping, or cheering) or indicating an engagement or interest level of the media reactions.

Likewise, consider a second case where a portion or portions of the media program may be selected through graphical user interface 700. Assume that a user wishes to see the best parts of a media program - such as parts where the user or one or more friends laughed at a comedy or cried during a melodrama. In the ongoing example, assume *Melody Pond* wishes to see the funniest parts of *The Office,* Episode 104, based on all three of her friend's reactions. In such a case, block 608 enables selection to display a portion or portions of the media program. Here *Melody Pond* may select a "Best Part!" control 730 or a "Best Five!" control 732 to see portions of *The Office* where all of her friends laughed (control 730) or all of them laughed or at least smiled (control 732). As in the above examples, interface module 110 may enable users to see these portions alone or in conjunction with a representation of one or more users' media reactions.

Block 610, responsive to selection of the media program or portion thereof, causes the media program or portion to be presented. Interface module 110, for example, may cause a television to present the portion of the media program or pop up a window showing the portion over or within graphical user interface 700. In cases where the media program is selected to be presented in conjunction with a representation of the user's media reactions, interface module 110 may render the program with an avatar presented in a corner of the display, for example. Interface module 110 is not limited to representing reactions of one user, interface module 110 may present *The Office* with avatars for all three of *Calvin, Lydia,* and *Amelia* to show their reactions during the program.

Concluding the ongoing example, interface module 110 at block 610, in response to selection of crying icon 728, presents a 30-second clip of *The Office* within a portion of graphical user interface 700.

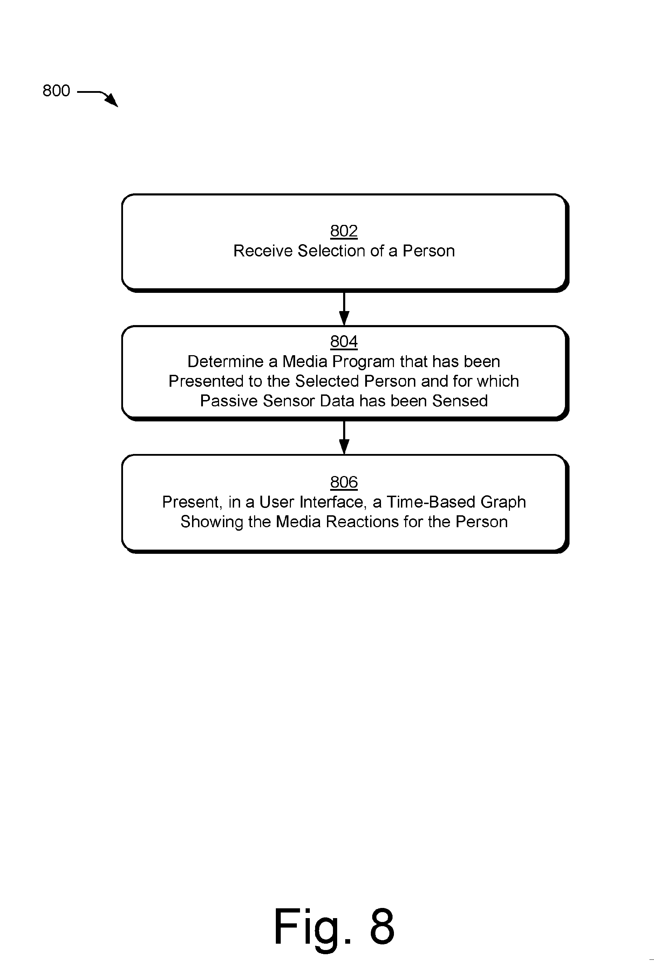

Fig. 8 depicts methods 800 enabling a user interface presenting media reactions. Methods 800 present media reactions for media programs responsive to determining which media programs a selected user has seen, though this is not required. The techniques may perform methods 400, 600, and/or 800, alone or in conjunction with each other, in whole or in part.

Block 802 receives selection of a user. The user may be selected through a user interface through which media reactions will be displayed, such as through a graphical representation or other identifier of the user, though this is not required.

Block 804 determines a media program that has been presented to the selected user and for which passive sensor data has been sensed during the presentation of the media program to the selected user.

By way of example, consider a case where a user of user interface 112 of Fig. 1 wishes to know what his best friend has watched over the last month. Assume that the user knows that he has similar tastes as his best friend and so would like to find out which programs his best friend liked. The techniques can enable the user to quickly and easily see what his best friend has watched as well as overall ratings for these programs and/or reactions to various portions of the programs.

Block 806 presents, in a user interface, a time-based graph for the user, the time-based graph showing media reactions for the user and determined based on the passive sensor data sensed during the presentation of the selected media program to the user. Interface module 110 may repeat block 804 and 806 to show numerous graphs for numerous media programs, such as time-based graphs for three movies, nine television shows, four music videos, twelve tweets, and six video clips. Interface module 110 may arrange these by media category, such as movies together, then television shows, and so forth, or by rating (*e.g*., highest rating to lowest rating), or by order viewed, to name just a few.

### Methods for Context-Based Ratings and Recommendations

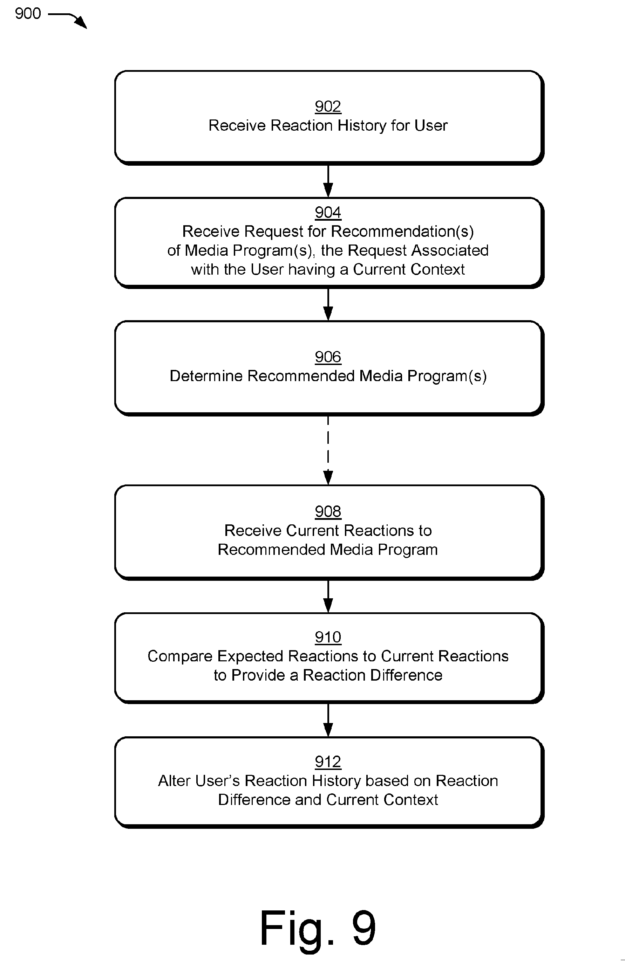

Fig. 9 depicts methods 900 enabling determination of a recommended media program based on a current context of a user and the user's reaction history. Reaction histories are described herein but also in more detail above and through additional methods described below.

Block 902 receives a reaction history for a user based on prior reactions of the user, the prior reactions from the user reacting to media programs during prior contexts. As noted elsewhere herein, the reaction history is based on the user's prior reactions to media, at least some of which are based on contexts during which the user's reactions where sensed or indicated. As noted above, these reactions can be based on passively sensed or non-passively sensed data. This data can be used to determine interest levels, states, and/or engagements at multiple times during each media program, though this is not required by the techniques. Further, the reaction history may include reactions weighted based on prior contexts, altered based on similar users' reactions to same or other media, and/or updated by comparing projected reactions of the user in a current context to actual reactions during that current context, each of which is described elsewhere herein.

Block 904 receives a request for a recommendation of a media program, the request associated with the user having a current context. This request can be received from the user though this is not required. Consider, for example, a computing device such as computing device 202 sensing that a particular user, such as *Joe* from the example in the *Overview* section, has walked into the kitchen. Further, assume that computing device 202 previously received a selection to automatically determine music to play when *Joe* is in the kitchen (such as through *Joe* selecting this weeks before). Assume here that *Joe* has just come home from work (e.g., the current context indicates that it is 6:20pm on a weekday), that he is the only user in the kitchen (also a current context), and that he is in the kitchen (a third current context). Computing device 202, in this example through context module 214, may receive or generate a request for recommended songs to play on a stereo in the kitchen along with the three current contexts and without a user explicitly requesting the recommendation.

Block 906 determines, based on the current context and the reaction history associated with the user, one or more recommended media programs. As noted in part above, contexts can be of various forms, including, for example, time contexts such as a time and a day of a week and non-time contexts such as a geography, country, city, or town, weather, other users in a room or home with the requesting user, ethnic region, or language. These contexts can be categorized to compare reactions during similarly categorized contexts, such as weather patterns, rooms of a user's house, geography, and so forth.

Continuing the ongoing example, assume that context module 214 determines categories for three current contexts for *Joe* as "just home from work" based on one context being that it is 6:20pm on a weekday and thus within two hours of *Joe's* workday ending, another as "alone" based on no other users being sensed in the kitchen, and a third as "non-sitting room" based on computing device 202 sensing *Joe* in the kitchen. The request is also for a particular type of media, here songs/music. Context module 214 compares these categories with those portions of *Joe's* reaction history 216 that have one or more of the same categories, such as other reactions sensed when *Joe* was in a room of his house where he is not sitting (kitchen or garage), alone, within two hours of a workday ending, and that the recorded reactions indicate *Joe* enjoyed (e.g., through states, engagement, or interest levels as noted above). Assume here that reaction history 216 has positive reactions for *Simon and Garfunkel's* song *Cecelia, No Doubt's* song *Don't Speak,* and *Bruce Springsteen's* song *Born in the USA* of about ten songs listened to during *Joe's* time in the garage. Further, assume that reaction history 216 has positive reactions from *U2's* song *Sweetest Thing* three weeks ago when *Joe* was cooking in the kitchen on a weekend (so the after-work category does not apply) and positive reactions to *Wagner's* opera *Die Walküre* in the kitchen after work last week but with other people present. Based on these user reactions and their similar contexts, with the number of contexts being similar weighted greatest, reaction history 216 determines that *Joe* will enjoy *U2's* song *Joshua Tree.*

Block 906 may present multiple recommended media programs or simply a best media program. Block 906 may also calculate ratings for the recommended media, and may present many media with their determined ratings. Thus, block 906 may present dozens of media choices with their calculated ratings. Further, in presenting recommended media, block 906 may indicate why that media was recommended, such as with text providing reasoning based on the current context (e.g., "we recommended *Sunshine Cleaners* because of the gray, rainy weather, that you prefer comedies on work nights, and because you enjoy movies with women in the leading role when watching with *Susan*").

In the above example, however, block 906 recommends media that is then automatically played for the user, as such, ratings are not presented.

Following block 906, methods 900 may proceed to alter the reaction history based on the user's reaction to the media recommended at block 906.

Block 908 receives current reactions to the recommended media program, the current reactions sensed during presentation of the recommended media program and with the current context. As noted, for the ongoing example context module 214 recommends *Joshua Tree,* which is presented (played over the stereo in the kitchen) and that current reactions are sensed by audience-sensing device 104 (e.g., as set forth in part in Figs. 1 and 2).

Block 910 compares projected reactions of the user during the current context to the current reactions to provide a reaction difference. Assume that context module 214 receives reactions from audience-sensing device 104 and one of modules 106, 108, or 110 during presentation of *Joshua Tree* to *Joe* and that these reactions are about what was projected by context module 214. In such a case, context module 214 may then alter reaction history 216 to show that the reactions were as projected or refrain from altering reaction history 216 as the reactions were as projected. Assume in a second case, however, that another iteration of block 906, after recommending *Joshua Tree,* then recommends a song by *Coldplay.* And in this second case, that *Joe's* current reaction is negative, which was not projected. In such a case, methods 900 proceed to block 912.

Block 912 alters the reaction history associated with the user based on the reaction difference. This is but one of the ways in which the techniques may continually improve a user's reaction history to better predict what a user will enjoy in various contexts. Concluding the ongoing example, context module 214 may return to blocks 902, 904, and/or 906 to provide another recommendation based on the altered reaction history for *Joe.* This altered reaction history indicates that in the current contexts, *Joe* does not prefer songs by *Coldplay* or songs similar to the song by *Coldplay* that was just played. Note, however, that *Joe* may still enjoy songs by *Coldplay* in other contexts. The techniques are capable, based on the context, to continue to recommended songs by *Coldplay* in other contexts.

### Methods for Building a Reaction History including based on Other Users' Reactions

As noted above, the techniques determine ratings and recommendations based on a user's current context and the user's reaction history. This reaction history, however, may be partly based on other user's reactions as noted herein.

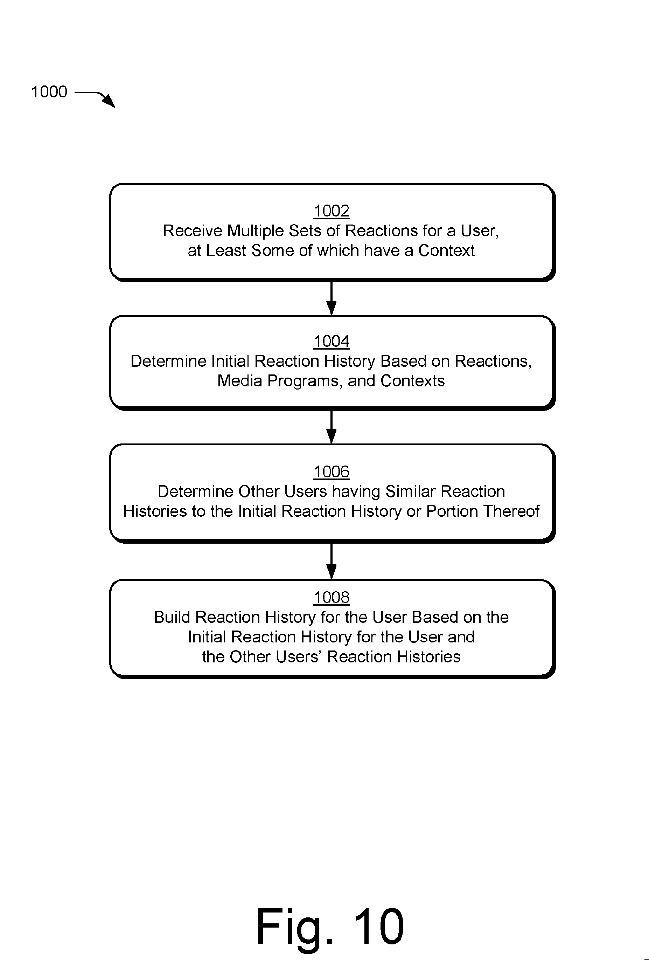

Fig. 10 depicts methods 1000 for building a reaction history based in part on other user's reactions.

Block 1002 receives multiple sets of reactions of a user, the multiple sets of reactions sensed during presentation of multiple respective media programs, at least some of the multiple sets of reactions of the user having a context in which the sets of reactions are sensed. Thus, the reaction history includes many sets of reactions sensed or received from a user where a context of those reactions was also recorded. These can include, for example, the songs, reactions, and contexts for those reactions of *Joe* above, or the many other example reactions, such as those illustrated in Fig. 5 and Fig. 7 but with context of those reactions also recorded.

Block 1004 determines, based on the multiple sets of the reactions, the media programs, and the contexts, an initial reaction history for the user. As noted herein, this may include categorizing reactions, weighting reactions, and the like to build an initial reaction history. This initial reaction history is useful without further alteration, though it may be improved with other user's reactions.

Block 1006 determines, based on the initial reaction history for the user, other users having similar reaction histories to the initial reaction history. Consider again the example where *Joe* is looking for a movie recommendation to watch with his seven-year-old daughter *Olivia.* Assume first that part of *Joe's* reaction history, such a category of reactions received when *Joe* watched a program with *Olivia,* is compared with many other persons having reaction histories or same or similar categories. Assume also that some of these other persons have similar reactions, such as reactions when a middle-aged father is watching programs with a five to nine-year-old daughter.

Block 1008 builds a reaction history for the user based on the initial reaction history for the user and the similar reaction histories for the other users, the reaction history enabling a rating or recommendation of media program for which reactions of the user have not yet been received to be provided based on a current context of the user. Concluding the example, here based on *Joe's* reactions in these similar contexts with other users having similar reactions in same or similar contexts, context module 214 builds a reaction history that takes into account these other user's reactions. Thus, if *Bill,* when watching movies with his eight-year-old daughter reacted similarly to some programs that *Joe* also watched, context module 214 may alter *Joe's* reaction history such that a program *Bill* watched with his daughter that *Joe* has not yet watch with *Olivia* will be more or less-highly rated or recommended based on *Bill's* reaction.

### Methods for Altering a Reaction History and Determining Recommended

### Programs based on a Time Context and a Non-Time Context

As noted above, the techniques determine ratings and recommendations based on a user's current context and the user's reaction history. This reaction history may be altered by weighting a user's reactions based on time and non-time contexts in which the user's reactions are sensed or received.

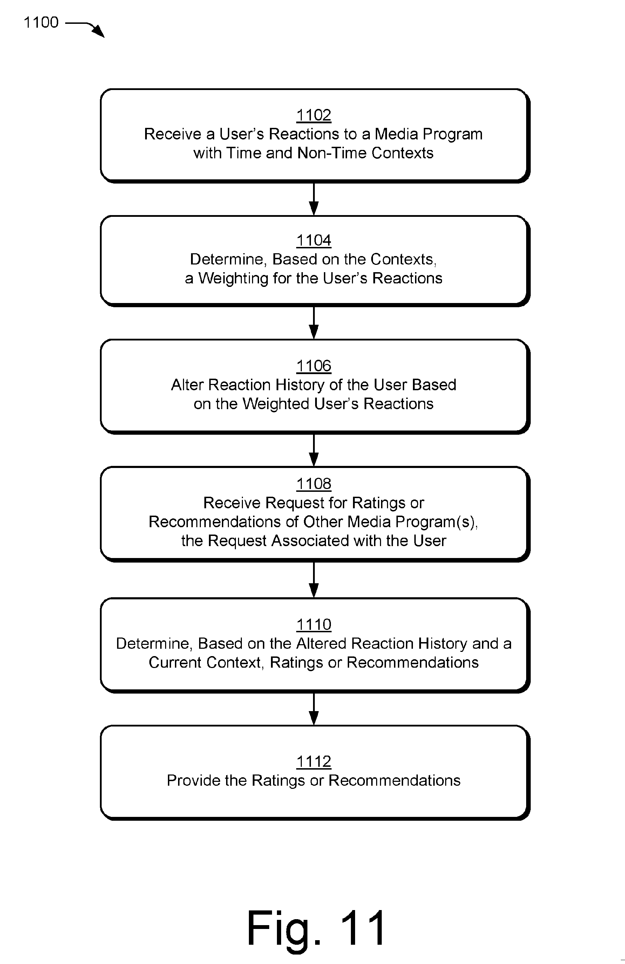

Fig. 11 depicts methods 1100 for altering a reaction history and determining recommended programs based on time and non-time contexts.

Block 1102 receives a user's reactions sensed during presentation of a media program and two or more contexts for the user's reactions during the presentation, the contexts for the user's reactions including a time context and a non-time context. Consider a case where a user named *Trong* watches a music video at 2:23am on a Saturday morning, with four other persons in the room, and in New York city. Here there are three contexts, a time context and two non-time contexts. Assume also that context module 214 receives, from state module 106 of Figs. 1 and 2, *Trong's* reactions as six different states that were based on passive sensor data sensed by audience-sensing device 104 over the course of the music video. Assume also that the six states are, in order: distracted, distracted, departed (not in room), departed, talking, and laughing.

Block 1104 determines, based on the contexts, a weighting for the user's reactions. This weighting increases or decreases the effect of the user reaction to the media program based on the context in which the reaction was sensed. For example, a positive reaction to a comedy may be up-weighted when the user is expected to be tired based on a time of day or watching alone or down-weighted when the user is known to have consumed alcohol, is not tired, or is watching with others.

Continuing the ongoing example, assume that *Trong's* negative reaction to the music video is determined to be down-weighted based on the time context, as this is known to be many hours past *Trong's* typical bedtime. Also assume that *Trong's* negative reaction to the music video is also down-weighted based on one of the non-time contexts, namely that four other people are present. More specifically, context module 214 determines that the talking state, which for a music video is determined to be a negative reaction, should be down-weighted based on the number of persons present (four) and the distracted states also down-weighted based on the number of persons. In this case the geographical context of New York city may reduce the down-weighting based on the time, as residents of New York city are more likely to stay up to 2 or 3 am in the morning on a Friday night (Saturday morning) than some other cities, such as a suburb of New York city. Here, however, the geographical context is not sufficient for the reactions to not be down-weighted.

Block 1106 alters a reaction history of the user based on the weighted user's reactions. Here then, context module 214 alters reaction history 216 for *Trong.* Based on the reactions being down-weighted, however, the alteration of *Trong's* reaction history may be small.

Consider the same six states for the same music video in different contexts, however. Assume that *Trong* reacted with the same six states, namely: distracted, distracted, departed, departed, talking, and laughing. Assume that it is 6:13pm on a Tuesday, still in New York city, and with no other persons present. Context module 214 may instead up-weight the distracted, talking, and laughing states. Here assume that *Trong* was distracted, left the room, and came back into the room after calling a friend (thus, the talking and laughing). The fact that *Trong* was distracted when there were no other persons present and at a time of day that he is unlikely to be tired likely means that *Trong* is not at all interested in this music video most of time. While departing the room may not be a large factor, as *Trong* has no guests and may still able to hear the music in an adjoining room, that *Trong* chose to call a friend rather than enjoy the music and video is highly indicative of *Trong* not enjoying the music video. In such a case, context module 214 would up-weight these reactions such that *Trong's* altered reaction history would indicate a low interest in this music video.

Block 1108 receives a request for ratings or recommendations of other media programs, the request associated with the user, the user having current contexts. Block 1108 may act similar to block 904 of methods 900. The request may or may not be explicit from the user.

Block 1110 determines, based on the altered reaction history and at least one of the current contexts, ratings or recommendations for media programs. Block 1110 may act similar to block 906 of methods 900.

Block 1112 provides the ratings or recommendations. Block 112 may provide a single recommendation or multiple ratings and/or recommendations. The provision may simply play the most-recommended or a set of recommended media (e.g., 10 songs determined to be highly rated). Block 1112 may provide them in a graphical user interface or in other manners. Thus, block 1112 (through context module 214 and/or interface module 110 and user interface 112) may present recommendations, their ratings, and even why the media was rated. Concluding the ongoing example, assume that both *Trong's* positive and negative music video reactions are used to alter *Trong's* reaction history. Assume also that *Trong* explicitly requests, on a Friday night and with friends in the room, recommended music videos. In response, context module 214, though use interface 112, presents a song list of 40 songs, their ratings, and why they are recommended (e.g., it is Friday night, you are having a party, this is a song liked by many in your age group, you liked it the last time you had friends over, etc.). In response, *Trong* may select to play these videos, remove or add songs to the list, and so forth.

The example described above for methods 1100 based recommendations on a reaction history built or altered based on time and non-time contexts. These methods may also base recommendations on a reaction history having weighted reactions, reactions of others, using categories, altered based on projected versus received reactions to particular media, or so forth as noted herein. Thus, methods 1100, as well as other methods herein, may be combined, in whole or in part.

The preceding discussion describes methods relating to context-based ratings and recommendations for media, as well as other methods and techniques. Aspects of these methods may be implemented in hardware (*e.g*., fixed logic circuitry), firmware, software, manual processing, or any combination thereof. A software implementation represents program code that performs specified tasks when executed by a computer processor. The example methods may be described in the general context of computer-executable instructions, which can include software, applications, routines, programs, objects, components, data structures, procedures, modules, functions, and the like. The program code can be stored in one or more computer-readable memory devices, both local and/or remote to a computer processor. The methods may also be practiced in a distributed computing mode by multiple computing devices. Further, the features described herein are platform-independent and can be implemented on a variety of computing platforms having a variety of processors.

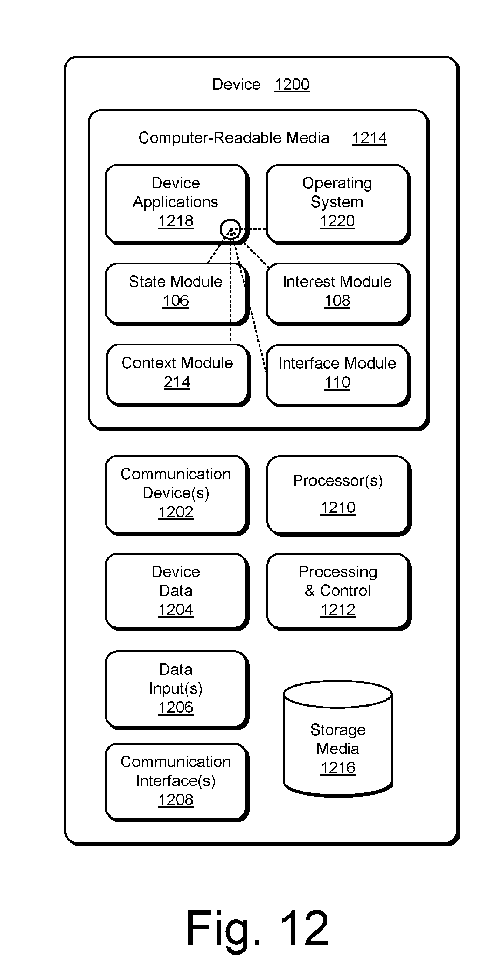

These techniques may be embodied on one or more of the entities shown in Figs. 1-3 and 12 (device 1200 is described below), which may be further divided, combined, and so on. Thus, these figures illustrate some of many possible systems or apparatuses capable of employing the described techniques. The entities of these figures generally represent software, firmware, hardware, whole devices or networks, or a combination thereof. In the case of a software implementation, for instance, the entities (*e.g*., state module 106, interest module 108, interface module 110, and context module 214) represent program code that performs specified tasks when executed on a processor (*e.g*., processor(s) 204 and/or 306). The program code can be stored in one or more computer-readable memory devices, such as media 206 and/or 308 or computer-readable media 1214 of Fig. 12.

### Example Device

Fig. 12 illustrates various components of example device 1200 that can be implemented as any type of client, server, and/or computing device as described with reference to the previous Figs. 1-11 to implement techniques enabling context-based ratings and recommendations for media. In embodiments, device 1200 can be implemented as one or a combination of a wired and/or wireless device, as a form of television mobile computing device (*e.g*., television set-top box, digital video recorder (DVR), etc.), consumer device, computer device, server device, portable computer device, user device, communication device, video processing and/or rendering device, appliance device, gaming device, electronic device, System-on-Chip (SoC), and/or as another type of device or portion thereof. Device 1200 may also be associated with a user (*e.g*., a person) and/or an entity that operates the device such that a device describes logical devices that include users, software, firmware, and/or a combination of devices.

Device 1200 includes communication devices 1202 that enable wired and/or wireless communication of device data 1204 (*e.g.,* received data, data that is being received, data scheduled for broadcast, data packets of the data, etc.). Device data 1204 or other device content can include configuration settings of the device, media content stored on the device (*e.g*., media programs 210), and/or information associated with a user of the device. Media content stored on device 1200 can include any type of audio, video, and/or image data. Device 1200 includes one or more data inputs 1206 via which any type of data, media content, and/or inputs can be received, such as human utterances, user-selectable inputs, messages, music, television media content, recorded video content, and any other type of audio, video, and/or image data received from any content and/or data source.

Device 1200 also includes communication interfaces 1208, which can be implemented as any one or more of a serial and/or parallel interface, a wireless interface, any type of network interface, a modem, and as any other type of communication interface. Communication interfaces 1208 provide a connection and/or communication links between device 1200 and a communication network by which other electronic, computing, and communication devices communicate data with device 1200.

Device 1200 includes one or more processors 1210 (*e.g*., any of microprocessors, controllers, and the like), which process various computer-executable instructions to control the operation of device 1200 and to enable techniques for context-based ratings and recommendations for media and other methods described herein. Alternatively or in addition, device 1200 can be implemented with any one or combination of hardware, firmware, or fixed logic circuitry that is implemented in connection with processing and control circuits which are generally identified at 1212. Although not shown, device 1200 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 1200 also includes computer-readable storage media 1214, such as one or more memory devices that enable persistent and/or non-transitory data storage (*i.e.,* in contrast to mere signal transmission), examples of which include random access memory (RAM), non-volatile memory (*e.g*., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 1200 can also include a mass storage media device 1216.

Computer-readable storage media 1214 provides data storage mechanisms to store device data 1204, as well as various device applications 1218 and any other types of information and/or data related to operational aspects of device 1200. For example, an operating system 1220 can be maintained as a computer application with computer-readable storage media 1214 and executed on processors 1210. Device applications 1218 may include a device manager, such as any form of a control application, software application, signal-processing and control module, code that is native to a particular device, a hardware abstraction layer for a particular device, and so on.

Device applications 1218 also include any system components, engines, or modules to implement techniques enabling context-based ratings and recommendations for media. In this example, device applications 1218 can include state module 106, interest module 108, interface module 110, or context module 214.

### Conclusion

Although embodiments of techniques and apparatuses enabling context-based ratings and recommendations for media have been described in language specific to features and/or methods, it is to be understood that the subject of the appended claims is not necessarily limited to the specific features or methods described. Rather, the specific features and methods are disclosed as example implementations enabling context-based ratings and recommendations for media.

## Claims

1. A computer-implemented method comprising:
receiving a request for a recommendation of a media program, the request associated with a user having a current context; and
determining, based on the current context and a reaction history associated with the user, a recommended media program, the reaction history based on prior reactions of the user, the prior reactions from the user reacting to other media programs during prior contexts.

2. A computer-implemented method as described in claim 1, further comprising:
receiving current reactions to the recommended program or another program, the current reactions sensed during presentation of the recommended media program or the other program and during the current context;
comparing projected reactions of the user during the current context to the current reactions to provide a reaction difference; and
altering the reaction history associated with the user based on the reaction difference.

3. A computer-implemented method as described in claim 1, wherein determining determines that other users that have reaction histories similar to the reaction history associated with the user positively reacted to the recommended media program during a context having a same category as the current context.

4. A computer-implemented method as described in claim 1, wherein the request is received explicitly from the user.

5. A computer-implemented method as described in claim 1, wherein the current context is a time and a day of a week and one or more of the prior contexts include similar times and same days of the week.

6. A computer-implemented method as described in claim 1, further comprising determining a category for the current context and wherein determining the recommended media program is based in part on prior reactions of the user in the reaction history that also have the category.

7. A computer-implemented method as described in claim 6, wherein the category is based on the user's work schedule.

8. A computer-implemented method as described in claim 6, wherein the category is a weather pattern, another person being in a same room as the user, a city, a language, or an ethnic region.

9. A computer-implemented method as described in claim 1, wherein the prior reactions on which the reaction history associated with the user is based includes multiple interest levels, states, or engagements determined at multiple times during presentation of the other media programs.

10. A computer-implemented method as described in claim 1, wherein determining the recommended media program determines multiple media programs and provides ratings, one of the ratings for each of the multiple media programs.
